Europäisches Patentamt

European Patent Office

Office européen des brevets

(19)

(11) Veröffentlichungsnummer: **0 393 209**
**A1**

## (12) EUROPÄISCHE PATENTANMELDUNG

(21) Anmeldenummer: **89106717.5**

(22) Anmeldetag: **14.04.89**

(51) Int. Cl.⁵: **B23K 7/00**

(43) Veröffentlichungstag der Anmeldung:
**24.10.90 Patentblatt 90/43**

(84) Benannte Vertragsstaaten:
**AT BE CH DE ES FR GB GR IT LI LU NL SE**

(71) Anmelder: **FA. HORST K. LOTZ**
**Robert-Bosch-Strasse 3**
**D-6238 Hofheim-Wallau(DE)**

(72) Erfinder: **Lotz, Horst K.**
**Fasanenweg 7**
**D-6240 Königstein-Johanniswald(DE)**
Erfinder: **Lotz, Mattias**
**Kiefernweg 13**
**D-6200 Wiesbaden-Delkenheim(DE)**

(54) Automatische Sauerstoff-Trenneinrichtung für bewegte Stränge und Bänder aus Stahl.

(57) Eine einfache, aber automatisch arbeitende Trenneinrichtung mit Sauerstoffschneidbrenner hat ein elastisches und verstellbares Führungsteil für den Vorschub des Schneidbrenners während des Mitlaufes mit dem Strang. Dieses bewirkt zusammen mit der Anklemmung einen kürzesten Schneidzyklus mit Schnittanfang und Schnittende nahe an den Strangaußenseiten und eine anfänglich auf Anschneidgeschwindigkeit verringerte Schneidgeschwindigkeit.

EP 0 393 209 A1

Für das Brennschneiden mit Sauerstoff zum Unterteilen von Strängen, insbesondere Knüppelsstränge in Stahl-Stranggießanlagen, sind eine Reihe von Geräte-, Einrichtungs- und Maschinenausführungen bekannt, die vom Handschneidbrenner bis zur vollautomatischen, aber auch von Hand bedienbaren Maschine mit allen erdenklichen Zusatzwirkungen reicht.

Im Bereich der kleineren Mehrfach-Stranggießanlagen mit relativ kleinen Strangquerschnitten setzte man gerne die verbrauchsgünstigen, aber teueren, schweren und viel Wartung erfordernden mechanischen Scheren ein. Bisweilen wurden auch einfache und einfachste Brennschneideinrichtungen und -maschinen eingesetzt, deren Betriebssicherheit ungenügend und deren Schneidzyklus, gleichbedeutend der kürzest möglichen Stücklänge, zu lang war.

Der gesamte Schneidzyklus für einen Schnitt setzt sich zusammen aus: Start zum Mitlauf durch Anklemmen, Start und Vorlauf des Schneidbrenners zur Strangvorderkante, Anheizen, Anschneiden, Schneiden, Ausschneiden bis Ende des Brennschnittes, Lösen der Anklemmung, Rücklauf des Schneidbrenners und der Maschine oder Einrichtung in die Ausgangsstellung.

Bei verschiedenen Strangquerschnitten, Stranglagen (+/- Abweichungen während des Gießens), Strangtemperaturen, Strangkanten und Verzunderungen wären aber teuere, schwierige bzw. umständliche Maßnahmen oder Einrichtungen notwendig, um für einen sicheren Betrieb und kurze Schneidlängen einen kürzesten Brennervorlauf, ein sicheres Anschneiden und einen kürzesten Brennerüberlauf zu erzielen. Bekannt ist aber nur eine je Gießgeschwindigkeit und möglicher Schneidgeschwindigkeit verstellbare Führungsschiene, um den Schneidbrenner aus seiner Ausgangsstellung während des Mitlaufes über den Strang in eine Endstellung zu schieben, das heißt ohne Brenner-Eilvorlauf zum Strang, ohne eine geringere Geschwindigkeit zum Anschneiden, ohne ein frühest mögliches Schnittende und das trotz schnell aufeinanderfolgender Querschnittswechsel, vor allem aber trotz zum Teil erheblicher Stranglageabweichungen.

Die nachstehend beschriebene Erfindung beansprucht trotz geringstem Aufwand an Einrichtung und Bedienung ein sicheres Anschneiden ohne Anheizen aber mit geringerer Anschneidgeschwindigkeit nur im Bereich der Strang-Vorderkante, und einen kürzesten Schneidzyklus mit Brennereilvorlauf zur Strangvorderkante und ein alsbaldiges Beenden des Schneidvorganges direkt nach dem Ausschneiden des Schneidbrenners aus dem Werkstück zu bewirken, und all dieses in automatischer Weise.

Dazu besteht die über dem Strang (1) auf Schienen (2) verfahrbare Trenneinrichtung (3) mit Sauerstoffschneidbrenner (4) aus zwei von einem Verbindungsträger (12) zusammengehaltenen Seitenwangen (9), von denen die eine zwei Spurlaufrollen (10) und die andere eine einfache Laufrolle (11), alle außenliegend, besitzt. Ebenfalls an den Seitenwangen (9) und innen ein vorderer Anklemmhebel (6) und ein hinterer Anklemmhebel (7) scherenartig bewegbar gelagert und an ihrem oberen Ende mit einem federbelasteten Balgzylinder (15) verbunden, der sie ohne Betriebsmittelzufluß zusammenzieht und unten öffnet, mit Betriebsmittelzufluß aber umgekehrt. Der vordere Anklemmhebel (6) ist wassergekühlt und hat an seinem unteren Ende eine Spurrolle (18), die waagerecht drehbar ist und eine ungekühlte Verlängerung mit oder als Anklemmkufe (17) mit schmaler Abmessung für die Bewegungsrichtung. Der ansonsten gleiche hintere Anklemmhebel (7) hat anstatt der Spurrolle (18) ein einfaches elektrisches Relais (20) mit einer breiten oder gabelförmigen Anlauffläche. In etwa der Mitte des Verbindungsträgers (12) ist ein Schneidbrenner (4) drehbar gelagert und hat am unteren Ende eine drehbar verstellbare Gleitkulisse (19). An den Seitenwangen (9), vielleicht auch am Unterstützungsträger (12), hängt eine großflächige, gewölbte und die ganze Breite und Länge der Trenneinrichtung abdeckende, vorzugsweise von Wasser durchflossene, Wärmeschutzplatte (16).

Aus dem Bereich der Ausgangsstellung der Trenneinrichtung (3) auf der Seite des vorderen Anklemmhebels (6) ist unter den Schienen (2) ein biegbares Führungsteil (5) schräg über den Strang (1) über der Wärmeschutzplatte (16) durch die Trenneinrichtung (3) hindurch so gespannt, daß sie einen Winkel mit der Achse des Stranges (1) bildet, der dem Verhältnis zwischen Stranggießgeschwindigkeit und einer sicheren Schneidgeschwindigkeit durch max. Mitlaufweg der Trenneinrichtung (3) und max. Querlaufweg des Schneidbrenners (4) entspricht. Die Gleitkulisse (19) am Schneidbrenner (4) liegt ständig an diesem Führungsteil (5) durch eine exzentrische Gewichtsbelastung an.

Auch die Spurrolle (18) am vorderen Anklemmhebel (6) und das elektrische Relais (20) am hinteren Anklemmhebel (7) befinden sich auf einer Höhe mit dem Führungsteil (5), das mittels einer Feder oder einem Gewicht mit Umlenkrolle unter Spannung steht, aber auch nachgeben kann. Die ganze Trenneinrichtung (5) kann mit einem Antrieb (21), der eine der Laufrollen (10,11) antreibt, verfahren werden.

Die Arbeitsweise der Trenneinrichtung (5) mit automatischem Ablauf von Start bis Start ist wie folgt:

Nach dem Einstellen aller verstellbaren Teile und der Betriebsmittel sowie dem Entzünden des Brenners ist die Trenneinrichtung arbeitsbereit. Ein Signal von Hand oder anders, z.B. von einer einfachen Längenmeßeinrichtung mit Klappenschalter, bewirkt ein Schließen der Anklemmhebel (6 und 7). Dabei wird das Führungsteil (5) von der Spurrolle (18) erfaßt und mitgenommen bis der Anklemmhebel (6) mit der Anklemmkufe (17) am Strang anliegt. Dabei wird das Führungsteil (5) verbogen und hat von Spurrolle (18) bis zur anderen Befestigung am Ende des Mitlaufweges einen kleineren Winkel mit dem Strang 1, der einer geringeren Vorschubgeschwindigkeit als vordem entspricht. Mit dem Führungsteil (5) wird auch der Schneidbrenner (4) an seiner Gleitkulisse (19) schnell zum Strang (1) hin in eine Anschneidstellung geschoben, der durch das Anklemmen bewirkte Mitlauf der Trenneinrichtung (2) mit dem Strang (1) zwingt den Schneidbrenner (1) durch das beigedrückte Führungsteil (5) langsam einzuschneiden. Da die Spurrolle (18) parallel zum Strang (1) bleibt und das schräge Führungsteil (5) im Mitlauf mit dem Strang (1) zunehmend frei gibt, nimmt dieses mehr und mehr seine ursprüngliche Winkelstellung wieder ein, was auch den Schneidbrenner (4) zunehmend schneller vorwärts bewegt, bis er die durch die ursprüngliche Schräge vorgegebene Schneidgeschwindigkeit erreicht hat und diese beibehält, bis er ausgeschnitten hat. Hier läuft nun das elektrische Relais (20) am anliegenden Anklemmhebel (7) gegen das Führungsteil (5) und meldet dieses Schnittende. Dadurch werden die Anklemmhebel (6 und 7) gelöst, der Schneidsauerstoff abgeschaltet und der Rücklauf der Trenneinrichtung (3) durch den Antrieb (21) ausgelöst. Das Führungsteil (5) gibt während des Rücklaufes den Schneidbrenner (4) frei und dieser kann in seine Ausgangsstellung zurückfallen.

Es ist auch denkbar, den hinteren Anklemmhebel (7) mit einer Spurrolle wie Spurrolle (18) auszustatten, diese jedoch vor dem Schneidbrenner (4) in Mitlaufrichtung gesehen zu befestigen. Dadurch wird der Winkel des den Schneidbrenner (4) im Mitlauf schiebenden Führungsteils (5) wieder abgeflacht und das Anschneiden erfolgt mit abnehmender Schneidgeschwindigkeit.

Automatische Sauerstoff-Trenneinrichtung für bewegte Stränge und Bänder aus Stahl

**Legende**

1 Strang
2 Schiene
3 Trenneinrichtung
4 Schneidbrenner
5 biegbares Führungsteil
6 vorderer Anklemmhebel
7 hinterer Anklemmhebel
8 Signalgeber
9 Seitenwange
10 Spurlaufrolle
11 Laufrolle
12 Verbindungsträger
13 Lagerstelle o. Verschiebebahn für den Brenner
14 Lagerstelle für Anklemmhebel
15 Balgzylinder
16 Wärmeschutzplatte
17 Anklemmkufe
18 Spurrolle
19 Gleitkulisse
20 elektrisches Relais
21 Antrieb

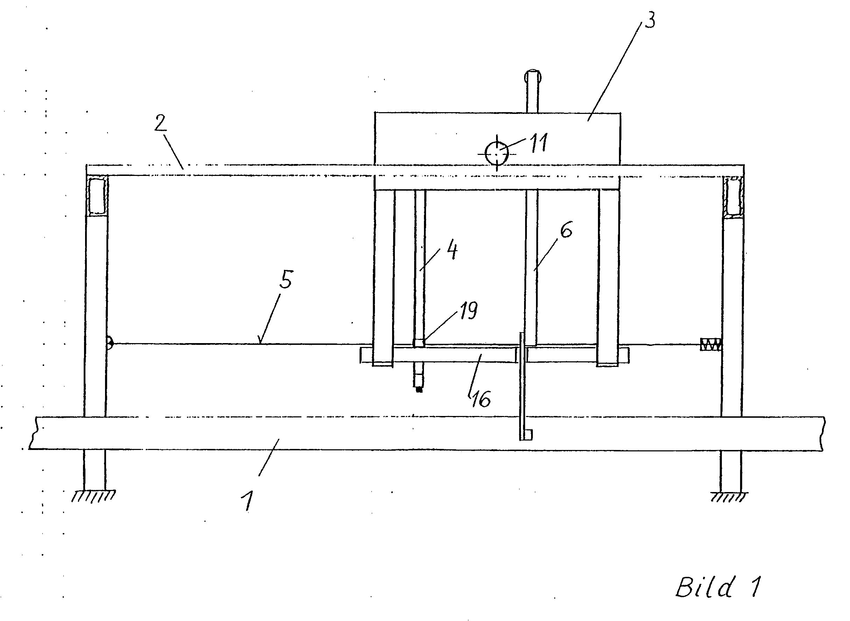

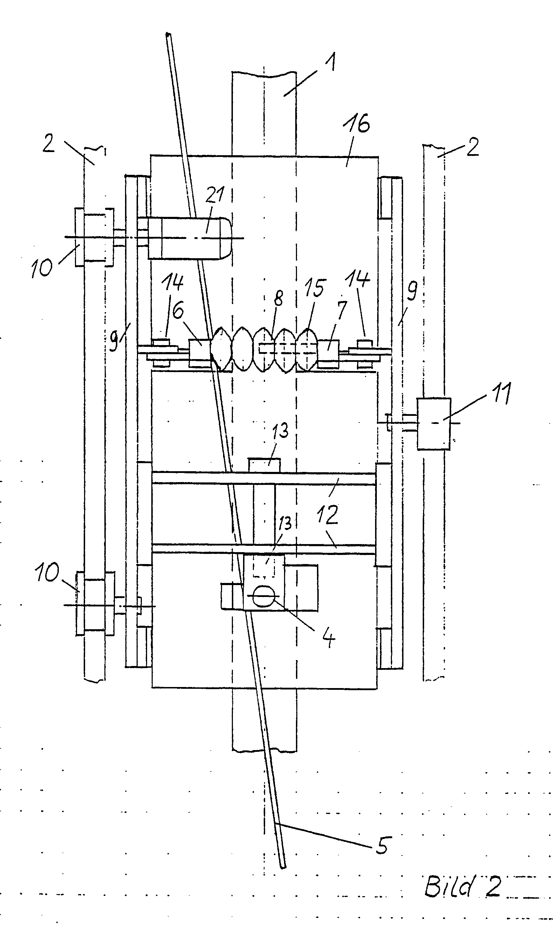

**Ansprüche**

1. Automatische Sauerstoff-Trenneinrichtung für bewegte Stränge und Bänder aus Stahl, dadurch gekennzeichnet, daß eine einfache durch An- oder Aufklemmen mitlaufende Trenneinrichtung (3) einen zum Schneiden verschieb- oder schwenkbaren Schneidbrenner (4) trägt, der durch ein schräg über den Strang gespanntes, biegbares Führungsteil (5) beim Mitlauf quer über den Strang (9) oder das Band geschoben werden kann und dieses biegbare Führungsteil (5) durch den vorderen Anklemmhebel (6) beim Start der Schneidbrenner (4) mit vorbewegend verschoben werden kann. Dabei wird anfangs ein kleinerer Winkel zwischen biegbarem Führungsteil (5) und Strang (1) erzeugt. Am hinteren Anklemmhebel (7) sitzt ein Signalgeber (8), der beim Auflaufen auf das biegbare Führungsteil (5) auf der hinteren Seite ein Endsignal geben kann, da auch der Sauerstoffbrenner (4) dann den Strang (1) überquert hat. Das biegbare Führungsteil (5) kann auch teilweise starr, aber auslenkbar sein.

2. Automatische Sauerstoff-Trenneinrichtung für bewegte Stränge und Bänder aus Stahl nach Anspruch 1, dadurch gekennzeichnet, daß die Trenneinrichtung (3) zwei einfache Seitenwangen (9) hat, wovon die eine zwei Spurlaufrollen (10) außen und die andere eine einfache Laufrolle (11) außen trägt. Ein einfacher Verbindungsträger (12) zwischen den Seitenwangen (9) trägt etwa mittig die Verschiebebahn oder die Lagerstelle für den verschiebbaren oder schwenkbaren, einseitig beschwerten Schneidbrenner (4). Hinter oder vor dem Verbindungsträger (12) sind innen an den Seitenwangen (9) Lagerstellen für die scherenartig bewegbaren Anklemmhebel (6 und 7) angeordnet und darüber zwischen den Anklemmhebeln (6 und 7) ein federgespannter Balgzylinder (15) vorzugsweise mit einem schon vorhandenen Betriebsmittel wie Sauerstoff oder Kühlwasser betätigt wird. An den Seitenwangen (9) oder am Verbindungsträger (12) hängt eine großflächige, gewölbte, vorzugsweise von Wasser durchflossene Wärmeschutzplatte (16) mit kleinsten Durchbrüchen für den Schneidbrenner (4) und die Anklemmhebel (6 und 7) hängen nur geringfügig über dem heißen Strang (1).

3. Automatische Sauerstoff-Trenneinrichtung für bewegte Stränge und Bänder aus Stahl nach einem der Ansprüche 1 oder 2, dadurch gekennzeichnet, daß die Anklemmhebel (6 und 7) für Wasserkühlung vorgesehen sind und an ihrer Vorderseite eine flache durch die Wärmeschutzplatte (16) hindurchreichende Verlängerung mit/als Anklemmkufe (17) trägt, auf ihrer Unterseite, Hinterseite oder dem Strang zugewandten Seite eine waagerecht, drehbare Spurrolle (18) zum Andrükken an das biegbare, den Strang (1) oberhalb der Wärmeschutzplatte (16) überquerende Führungsteil (5).

4. Automatische Sauerstoff-Trenneinrichtung für bewegte Stränge und Bänder aus Stahl nach einem der Ansprüche 1 bis 3, dadurch gekennzeichnet, daß der Schneidbrenner (4) im unteren Bereich, auf der Höhe des biegbaren Führungsteils (5) eine durch Drehen einstellbare, exzentrische Gleitkulisse (19) trägt, gegen die das letztere andrückt.

5. Automatische Sauerstoff-Trenneinrichtung für bewegte Stränge und Bänder aus Stahl nach einem der Ansprüche 1 bis 4, dadurch gekennzeichnet, daß der hintere Anklemmhebel (7) ein einfaches elektrisches Relais (20) zum Beispiel einen Endschalter für das Signalschnittende trägt, der mit ausreichend breiter Fläche oder Gabel gegen das biegbare schräge Führungsteil (5) läuft, wenn dieses zu dem Zeitpunkt von diesem Anklemmhebel (7) erreicht wird, wenn auch der Schneidbrenner (4) über die ganze Breite des Stranges (1) gedreht bzw. geschoben ist.

6. Automatische Sauerstoff-Trenneinrichtung für bewegte Stränge und Bänder aus Stahl nach einem der Ansprüche 1 bis 5, dadurch gekennzeichnet, daß das biegbare Führungsteil (5) zum Beispiel ein durch Feder oder Gewicht mit Umlenkrolle vorgespanntes Stahlseil, eine entsprechende Kette oder ein elastisches Flachmaterial z. B. Blech ist und unterhalb der Schienen (2) der Trenneinrichtung (3) gegebenenfalls durch die Trenneinrichtung (3) hindurchführend verstellbar so angebracht ist, daß der Winkel zwischen Strang (1) und Führungsteil (5) einem für den Betrieb sicheren Verhältnis von Mitlaufweg der Trenneinrichtung (3) zum Vorschubweg des Schneidbrenners (4) oder entsprechend einem solchen von Gießgeschwindigkeit zu Schneidgeschwindigkeit entspricht.

7. Automatische Sauerstoff-Trenneinrichtung für bewegte Stränge und Bänder aus Stahl nach einem der Ansprüche 1 bis 6, dadurch gekennzeichnet, daß die Lage der Kante des Stranges (1), Anklemmhebel (6 und 7) mit Spurrolle (18), Anklemmkufe (17) und biegbarem Führungsteil (5) so aufeinander abgestimmt sind, daß sich bei Beginn des Mitlaufes ein flacherer Winkel als später zwischen biegbarem Führungsteil (5) und Strang (1) ergibt, der eine geringere Anfangsgeschwindigkeit = Anschneidgeschwindigkeit für den Schneidbrenner (4) ergibt.

8. Automatische Sauerstoff-Trenneinrichtung für bewegte Stränge und Bänder aus Stahl nach einem der Ansprüche 1 bis 7, dadurch gekennzeichnet, daß statt eines gewichtsbelasteten Seilzuges auf einer der drei Spur- bzw. Laufrollen (10 und 11) an den Seitenwangen (9) ein vorzugsweise durch schon vorhandene Betriebsmittel oder Preßluft betriebener Antrieb (21) sitzt, der die Trenneinrichtung (3) auf das Signal "Schnittende" zur Ausgangsstellung fahren kann.

Bild 1

Bild 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 588 066 (REINFELD ET AL.) <br> * Spalte 1, Zeile 67 - Spalte 5, Zeile 69; Figuren 1-7 * <br> --- | 1 | B 23 K 7/00 |
| A | US-A-3 692 292 (ROKOP ET AL.) <br> * Spalte 2, Zeile 18 - Spalte 7, Zeile 24; Figuren 1-5 * <br> ----- | 1, 2 | |
| | | | **RECHERCHIERTE SACHGEBIETE (Int. Cl.5)** <br><br> B 23 K <br> B 22 D |

Der vorliegende Recherchenbericht wurde für alle Patentansprüche erstellt

| Recherchenort | Abschlußdatum der Recherche | Prüfer |
|---|---|---|
| DEN HAAG | 14-12-1989 | DEMOLDER J. |